# EUROPÄISCHE PATENTSCHRIFT

(11) **EP 3 238 529 B1**
(45) Veröffentlichungstag und Bekanntmachung des Hinweises auf die Patenterteilung: **13.03.2019**
(21) Anmeldenummer: 17000400.6
(22) Anmeldetag: 13.03.2017
(51) Int. Cl.: A01G 13/02, A01G 9/14, A01G 22/10

(54) **VERWENDUNG EINER ABDECKUNG FÜR EIN TUNNELSYSTEM, VORZUGSWEISE FÜR SPARGELDÄMME**
USE OF A COVER FOR A TUNNEL SYSTEM, PREFERABLY FOR ASPARAGUS BEDS
UTILSATION D'UNE BÂCHE DE PROTECTION POUR UN SYSTÈME DE TUNNEL, DE PRÉFÉRENCE POUR BUTTES D'ASPERGES

(30) Priorität: 29.04.2016 DE 102016005275
(43) Veröffentlichungstag der Anmeldung: 01.11.2017
(73) Patentinhaber: Böckenhoff, Bernhard, 46348 Raesfeld-Erle (DE)
(72) Erfinder: Böckenhoff, Bernhard, 46348 Raesfeld-Erle (DE)
(74) Vertreter: Von Rohr Patentanwälte Partnerschaft mbB

(56) Entgegenhaltungen:
- WO-A1-2008/098265
- WO-A1-2009/144018
- DE-U1-202013 105 195
- FR-A1- 2 569 523
- JP-A- 2009 045 060

## Beschreibung

Die Erfindung betrifft die Verwendung einer Abdeckung für ein Tunnelsystem, vorzugsweise für Spargeldämme.
Eine aus zwei Folienbahnen bestehende Abdeckung für Spargelfelder ist bereits aus der DE 100 18 079 C2 bekannt. Die Abdeckung weist eine langgestreckte erste Folienbahn und eine weitere Folienbahn auf, wobei beide Folienbahnen die gleiche Länge und die gleiche Breite haben. Die erste Folienbahn ist mit der weiteren Folienbahn unter Bildung wenigstens eines druckdichten Hohlraums fest verbunden. Die weitere Folienbahn besteht aus einem lichtdurchlässigen Material, wobei die erste Folienbahn auf der der weiteren Folienbahn zugewandten Seite dunkel ist und die erste Folienbahn auf der der weiteren Folienbahn abgewandten Seite reflektierend ist.
Durch die aus der DE 100 18 079 C2 bekannte Abdeckung kann in Abhängigkeit davon, welche der beiden Folienbahnen der Sonne zugewandt ist, die Temperatur des zwischen den Folienbahnen befindlichen Luftpolsters reguliert werden. Ist die weitere Folienbahn, die aus einem lichtdurchlässigen Material besteht, der Sonne zugewandt, fallen Sonnenstrahlen ungehindert durch die lichtdurchlässige weitere Folienbahn auf die der weiteren Folienbahn zugewandte Seite der ersten Folienbahn. Durch die dunkle Oberfläche dieser Folienbahn wird die Wärmeenergie der auftreffenden Sonnenstrahlen zum überwiegenden Maße absorbiert, so dass sich die erste Folienbahn erwärmt. Diese Wärme geht durch Wärmeleitung und Wärmestrahlung einerseits auf den unter der Abdeckung befindlichen Spargeldamm und andererseits auf das zwischen den beiden Schichten ruhende Luftpolster über, so dass auch dieses verstärkt erwärmt wird. Die Erwärmung des Luftpolsters beginnt in dem Bereich, der unmittelbar an der dunklen Seite anliegt. Die erwärmte Luft hat eine geringere Dichte und steigt innerhalb des Luftpolsters nach oben, wodurch kühlere Luft nach unten nachströmt. Dieser als freie Konvektion bezeichnete zusätzliche Wärmeübergang führt dazu, dass das Luftpolster homogen erwärmt wird. Die Erwärmung des Luftpolsters führt dabei auch dazu, dass der Spargeldamm trotz abnehmender Temperaturen beispielsweise am Abend eine längere Zeit eine höhere Temperatur hat, was sich günstig auf das Spargelwachstum auswirkt.

Soll das Spargelwachstum beispielsweise aufgrund einer geringeren Nachfrage verringert werden, so wird die bekannte Abdeckung gedreht, so dass die reflektierende Seite der ersten Folienbahn der Sonne zugewandt ist. Auf diese Weise wird ein Großteil der auftreffenden Sonnenstrahlen reflektiert. Die erste Folienbahn wird somit wesentlich weniger erwärmt als für den Fall, dass die lichtdurchlässige Folienbahn der Sonne zugewandt ist. In Folge dessen wird das zwischen den Folienbahnen befindliche Luftpolster durch Wärmeleitung und Wärmestrahlung nur verlangsamt erwärmt. Zu Beginn der Wärmeübertragung durch Wärmeleitung wird wiederum der an der Innenseite der ersten Folienbahn anliegende obere Bereich des Luftpolsters erwärmt. Abweichend ist es hier allerdings so, dass der Wärmeübergang durch freie Konvektion nicht möglich ist, da die leichtere, wärmere Luft bereits oben anliegt und kühlere Luftschichten nicht nachströmen können. Das Luftpolster zeigt eine inhomogene Temperaturverteilung und wird im Vergleich zum erstgenannten Fall, bei dem die lichtdurchlässige Seite der Abdeckung der Sonne zugewandt ist, langsamer und weniger stark erwärmt.

Die bekannte Abdeckung ist an sich dazu ausgebildet und vorgesehen, unmittelbar auf einen Spargeldamm aufgelegt zu werden. Um zu gewährleisten, dass ein Luftpolster zwischen der ersten und der weiteren Folienbahn ausgebildet werden kann, ist dem Hohlraum eine Ventileinrichtung zugeordnet, so dass (Druck-)Luft über die Ventileinrichtung in den Hohlraum eingeblasen werden kann, wobei die Ventileinrichtung dann garantiert, dass die Luft aus dem Hohlraum nicht wieder herausströmt.

Problematisch ist, dass es bei der Handhabung der bekannten Abdeckung leicht dazu kommen kann, dass Luft aus dem Hohlraum entweicht und sich die erste Folienbahn und die weitere Folienbahn dann aneinanderlegen. Der zuvor beschriebene Effekt tritt dann - wenn überhaupt - allenfalls in beschränktem Umfang auf.

Aus der DE 44 24 123 C2 und der DE 10 2010 047 591 B3 ist jeweils ein Tunnelsystem für einen Spargeldamm bekannt, wobei eine Mehrzahl von in Längsrichtung des Spargeldamms hintereinander angeordneten, in den Boden eingesteckten Stützelementen und eine auf den Stützelementen angeordnete transparente obere Folie vorgesehen sind. Des weiteren ist unterhalb des eigentlichen Tunnelsystems eine unmittelbar auf den Spargeldamm aufgelegte Spargelfolie vorgesehen. Die Stützelemente sind im Abstand zu der Spargelfolie derart angeordnet, dass sich zwischen der Spargelfolie und der oberen auf die Stützelemente aufgelegten Folie ein Zwischenraum oberhalb des Spargeldamms ergibt.

Das bekannte Tunnelsystem ermöglicht selbst bei kühlen Außentemperaturen eine nicht unerhebliche Verkürzung der Wachstumsperiode und/oder der Erntezeit. Bei den bekannten Tunnelsystemen gelangen zwei voneinander separate Folien zum Einsatz, nämlich die untere, auf den Spargeldamm aufgelegte Spargelfolie, die üblicherweise auf der einen Seite schwarz und auf der anderen Seite weiß ist und die bedarfsweise auf die schwarze oder die weiße Seite gedreht wird. Die äußere, auf die Stützelemente aufgelegte Folie stellt in der Regel eine transparente Folie aus Kunststoff dar. Zwischen beiden Folien ist zumindest in Teilbereichen ein Zwischenraum mit einer Luftschicht vorgesehen. Diese Luftschicht wird durch das Licht und/oder Sonnenstrahlen erwärmt, wobei die äußere transparente Folie die erwärmte Luft auch dann im Tunnel hält, wenn die Außentemperaturen vergleichsweise niedrig sind. Es wird hierdurch eine gute Ausnutzung der Sonnenenergie gewährleistet, eine schnellere und stärkere Erwärmung des Spargeldamms sichergestellt und ferner eine zu schnelle Auskühlung des Spargeldamms, beispielsweise in der Nacht oder während kühleren Tagen, verhindert. Gerade im Spargelanbau ergibt sich auf diese Weise eine wesentliche erhöhte Stechleistung.

Problematisch bei den bekannten Tunnelsystemen ist, dass die im Zwischenraum zwischen der aufgelegten äußeren Folie und der unteren auf den Spargeldamm aufgelegten Spargelfolie befindliche Luft schon bei vergleichsweise kurzen Kälteperioden, die insbesondere zu Beginn der Spargelsaison auftreten können, vergleichsweise schnell abkühlt, so dass der gewünschte Effekt letztlich nur für einen geringen Zeitraum nutzbar ist.

Die WO 2008/098 265 A1 betrifft eine Abdeckung für Gewächshäuser, wobei die Abdeckung zumindest zwei übereinander angeordnete Kunststofffolien aufweist. Zwischen den Folien ist ein Luftpolster angeordnet.

Aus der FR 2 569 523 A1 geht eine einlagige Folie zum Einsatz in der Landwirtschaft hervor. Metallstäbe sind in der Folie eingefasst.

Aus der WO 2009/144018 A1 geht eine Agrarfolienanordnung hervor, die zwei überlappende Folien mit unterschiedlichen optischen Eigenschaften aufweist.

Die DE 20 2013 105 195 U1 betrifft eine Agrarfolienanordnung zur Abdeckung von Pflanzdämmen, wobei die Agrarfolienanordnung eine erste Folie zur Überdeckung mindestens zweier benachbarter Pflanzdämme und eine Stützvorrichtung mit Abstützungen der ersten Folie an den Pflanzdämmen aufweist. Zwischen den Pflanzdämmen kann eine weitere Folie angeordnet werden, die an die erste Folie angebracht werden kann.

Die JP 2009 045 060 A betrifft eine dreilagige Folie zur Bedeckung eines Gewächshauses. Zwischen den äußeren Folien ist eine weitere Folie derart eingelegt, dass sich eine Mehrzahl von zylinderförmigen Hohlräumen bildet.

Aufgabe der Erfindung ist es daher, die Verwendung einer Abdeckung für ein Tunnelsystem, insbesondere für einen Spargeldamm, zu ermöglichen, wobei ein zu schnelles Auskühlen der Luft zwischen der Abdeckung und dem Spargeldamm verhindert wird.

Die vorgenannte Aufgabe ist erfindungsgemäß im wesentlichen durch die Merkmalskombination des Patentanspruchs 1 gelöst.

Die Unterseite der ersten Folie im Überdeckungsbereich der beiden Folien weist eine größere Fläche als die Unterseite der zweiten Folie auf. Im Ergebnis hat die erste bzw. untere Folienbahn damit einen Materialüberschuss bzw. -speicher bezogen auf die korrespondierende Fläche der zweiten Folienbahn. Dies führt dazu, dass sich zwischen der oberen und der unteren Folie ohne weiteres wenigstens ein Hohlraum ausbilden kann, der zu Isolierungszwecken dient. Der erfindungsgemäße Effekt stellt sich insbesondere bei einem Tunnelsystem der eingangs genannten Art ein, wenn die wenigstens zweischichtige Abdeckung auf die Stützelemente aufgelegt wird. Aufgrund des Materialüberschusses bzw. -speichers der ersten bzw. unteren Folie gegenüber der zweiten bzw. oberen Folie hängt bei einer über die Stützelemente gelegten Abdeckung die untere Folie stärker durch als die obere Folie. Damit entsteht aufgrund des unterschiedlich starken Durchhängens der oberen Folie und der unteren Folie wenigstens ein Hohlraum zwischen den beiden Folienbahnen innerhalb der Abdeckung, der zu einer sehr guten Isolierungswirkung führt. Gerade in Verbindung mit einem Tunnelsystem der eingangs genannten Art führt diese Isolierung durch die auf die Stützelemente aufgelegten Abdeckung dazu, dass die zwischen der Abdeckung und der unteren Spargelfolie befindliche Luft auch in längeren Kälteperioden sehr viel länger bei einer wachstumsfördernden Temperatur verbleibt und erst sehr viel später abkühlt als bei Verwendung einer nur einschichtigen Folienbahn als Abdeckung wie beim Stand der Technik.

Zur Realisierung des Flächenspeichers bzw. -überschusses ist erfindungsgemäß vorgesehen, dass die Unterseite der ersten Folie eine größere Breite und/oder eine größere Länge als die Unterseite der zweiten Folie aufweist, und zwar in dem Bereich, in dem sich die Folien überdecken bzw. überlappen.

In diesem Zusammenhang ist festgestellt worden, dass sich bereits hinreichende isolierende Hohlräume zwischen dem überdeckenden Bereich der ersten und der zweiten Folie dann ausbilden, wenn die Fläche der ersten Folie um mehr als 2% größer ist als die Fläche der zweiten Folie. Die Breite und/oder die Länge der ersten Folie ist im Überdeckungsbereich zwischen 5% und 40%, bevorzugt zwischen 6% und 30%, weiter bevorzugt zwischen 7% und 20% und insbesondere zwischen 8% und 15% größer als die Länge und/oder Breite der zweite Folie. Je größer die Flächendifferenz zwischen der ersten und der zweiten Folie ist, desto größer wird auch der Hohlraum zwischen den beiden Folien im auf die Stützelemente aufgelegten Zustand der Abdeckung und damit deren Isolierwirkung. Allerdings erhöht sich auch der Materialbedarf bei einer entsprechend vergrößerten ersten Folie, was wiederum zu höheren Kosten führt. Letztlich ergibt sich in den beanspruchten Bereichen der beste Kosten-Nutzen-Effekt.

Der Flächenüberschuss bzw. -speicher im Überdeckungsbereich der beiden Folien wird dadurch realisiert, dass die erste Folie wenigstens eine querlaufende Falte und/oder wenigstens eine längslaufende Falte aufweist. So kann beispielsweise bei einer 100 m langen Abdeckung die Länge der oberen Folie 100 m betragen, während die Länge der unteren Folie 110 m betragen kann. Hierbei kann dann in insbesondere regelmäßigen Abständen, beispielsweise im Abstand von 1 m, eine Querfalte vorgesehen sein, die im ausgefalteten Zustand eine Länge von 10 cm hat. Wird beispielsweise alle 2 m eine Falte realisiert, so hat diese Falte im ausgefalteten Zustand eine Länge von 20 cm. Statt einer oder insbesondere mehrerer Querfalten oder auch in Ergänzung dazu ist es auch möglich, wenigstens eine Längsfalte in der ersten Folie zu realisieren. Hat beispielsweise die zweite Folie eine Breite von 2 m, so kann die erste, untere Folie im ausgefalteten Zustand eine Breite von 2,20 m haben. Im eingefalteten Zustand hat die erste, untere Folie ebenfalls eine Breite von 2 m. Im übrigen versteht es sich, dass es grundsätzlich auch möglich ist, statt einer Längsfalte mehrere längslaufende Falten, die vorzugsweise parallel zueinander verlaufen, vorzusehen.

Bei der erfindungsgemäßen Verwendung der Abdeckung ist im übrigen vorgesehen, dass die erste und die zweite Folie zwar an ihren Längsrändern miteinander verbunden sind, und zwar insbesondere über luftdichte längslaufende Verbindungen, während die erste und die zweite Folie an ihren Stirnseiten unverbunden sind. Hierdurch ergibt sich ein nur endseitig geöffneter Hohlraum in der Abdeckung. Insbesondere in Verbindung mit einem Tunnelsystem der eingangs genannten Art ist es nicht erforderlich, die Stirnseiten der Abdeckung zu schließen. Letztlich bilden sich zwischen den beiden Folien im auf die Stützelemente aufgelegten Zustand zwischen zwei Stützelementen aufgrund des unterschiedlich starken Durchhängens einzelne Hohlräume, wobei es nicht erforderlich ist, die in den einzelnen Hohlräumen befindliche Luft über eine Ventileinrichtung zu sichern.

Bei der längslaufenden Verbindung zwischen der ersten und der zweiten Folie kann es sich um eine stoffschlüssige Verbindung handeln. In diesem Fall sind die erste und die zweite Folie aus einem Folienschlauch, insbesondere durch Extrusion, hergestellt worden. Bei einer ersten Herstellungsalternative wird die erste Folie nach der Herstellung des Schlauchs gedehnt. Bei dieser Ausführung weist die erste Folie aufgrund der Dehnung des Folienmaterials nach der Herstellung eine geringere Dicke auf als die zweite Folie. Alternativ ist es möglich, den Schlauch nach der Herstellung längs zu falten, das heißt mit einer Längsfalte zu versehen, so dass sich der Materialspeicher ergibt. Hierbei haben dann beide Folien die gleiche Schichtdicke.

Bei einer zur Extrusion alternativen Ausführungsform sind die erste Folie und die zweite Folie als ursprünglich separate langgestreckte Folienbahnen ausgebildet, die randseitig über Verbindungen, insbesondere Schweiß- oder Klebverbindungen, miteinander verbunden sind. Bei dieser Ausführungsform kann die Dicke der ersten und/oder der zweiten Folie bedarfsweise ausgewählt werden. In der Regel weisen beide Folien die gleiche Dicke auf.

Bevorzugt besteht die erste Folie und auch die zweite Folie aus einem transparenten Kunststoffmaterial, das im wesentlichen dazu dient, den Hohlraum zu bilden, um damit eine gute Isolierung zu erzielen. Alternativ ist es auch möglich, dass die Abdeckung neben der Isolierfunktion eine ergänzende Heizfunktion übernimmt. Hierzu besteht die obere Folie dann aus einem transparenten Material, während die untere Folie auf ihrer Oberseite, die der oberen Folie zugewandt ist, schwarz ist.

Damit sich die beiden Folien insbesondere nach dem Auflegen auf die Stützelemente des Tunnelsystems leicht voneinander lösen, was in der Regel bereits durch die Eigengewichtskraft der unteren Folie erfolgt, können ergänzende Mittel vorgesehen sein, um diesen Effekt zu unterstützen. So kann beispielsweise die Oberseite der ersten Folie und/oder die Unterseite der zweite Folie eine Beschichtung zur Verminderung der Oberflächenspannung aufweisen. Auch kann ein sich zumindest im wesentlichen über die Länge der Folie erstreckender Streifen zwischen den beiden Folien vorgesehen sein, dessen Gewichtskraft der Oberflächenspannung entgegenwirkt und zum Lösen der beiden Folien voneinander im verlegten Zustand beiträgt.

Um auch bei starkem Wind ein Wegwehen der Abdeckung zu verhindern, sind längsrandseitig Taschen zur Aufnahme von Beschwerungsgut vorgesehen. Die Taschen können auf unterschiedliche Weise hergestellt sein. Zum einen können die Taschen durch eine randseitige Faltung realisiert werden. Dabei kann die randseitige Faltung zur Bildung der Tasche durch die erste und/oder die zweite Folie erfolgen. Werden die Taschen nur durch die obere, zweite Folie gebildet, gehört definitionsgemäß der durch die Taschen gebildete Beschwerungsbereich nicht mehr zu der zu betrachtenden Unterseite der zweiten Folie, da es bei nur einer Folie keine Überdeckung mit der anderen Folie gibt. Bei der alternativen Ausführungsform werden die Taschenöffnungen in die Abdeckung randseitig eingeschnitten. Dies geschieht bevorzugt, nachdem entsprechende Taschenverschweißungen im Überdeckungsbereich vorgesehen worden sind.

Ein Tunnelsystem, insbesondere für Spargeldämme, weist eine Mehrzahl von in den Boden einzusteckenden Stützelementen und wenigstens einer Abdeckung nach einer der zuvor beschriebenen Merkmalskombinationen auf, wobei die Abdeckung im Gebrauchszustand auf den Stützelementen angeordnet ist. Das Tunnelsystem zeichnet sich dadurch aus, dass im Gebrauchszustand, das heißt bei auf die Stützelemente aufgelegter Abdeckung, die erste, untere Folie stärker in Richtung auf den Spargeldamm durchhängt als die zweite, obere Folie, wobei sich dann zwischen zwei benachbarten Stützelementen jeweils ein mit Luft gefüllter Hohlraum zwischen den Folien aufgrund des unterschiedlich starken Durchhängens der beiden Folien ergibt.

Ein Verfahren zum Aufbau eines Tunnelsystems der vorgenannten Art ist dergestalt, dass über wenigstens eine offene Stirnseite der Abdeckung zwischen die beiden Folien ein Gas, insbesondere Luft, eingebracht wird, um die beiden Folien voneinander zu lösen. Dabei kann das Einbringen des Gases vor und/oder während und/oder nach dem Auflegen der Abdeckung auf die Stützelemente erfolgen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt
- Fig. 1: eine Draufsicht auf einen Teil einer Abdeckung mit einer längslaufenden Falte,
- Fig. 2: eine Ansicht der Abdeckung aus Fig. 1 in Pfeilrichtung II aus Fig. 1 gesehen,
- Fig. 3: eine der Fig. 2 entsprechende Ansicht einer weiteren Ausführungsform einer Abdeckung mit drei längslaufenden Falten,
- Fig. 4: eine der Fig. 1 entsprechende Ansicht einer anderen Ausführungsform einer Abdeckung mit einer querlaufenden Falte,
- Fig. 5: eine der Fig. 3 entsprechende Ansicht einer anderen Ausführungsform einer Abdeckung,
- Fig. 6: eine Draufsicht auf die Abdeckung aus Fig. 5,
- Fig. 7: eine perspektivische Ansicht eines Teils eines Tunnelsystems,
- Fig. 8: eine Ansicht des Tunnelsystems aus Fig. 5 in Pfeilrichtung VIII aus Fig. 7 gesehen und
- Fig. 9: eine Ansicht des Tunnelsystems aus Fig. 5 im Pfeilrichtung IX aus Fig. 7 gesehen.

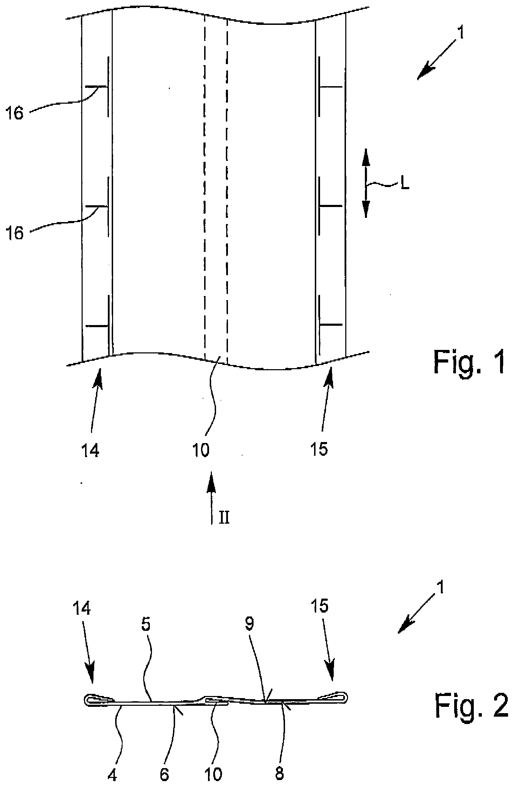

In den Fig. 1 bis 6 sind verschiedene Abdeckungen 1 dargestellt, auf die nachfolgend näher eingegangen wird. Die in den Fig. 1 und 2 dargestellte Abdeckung 1 ist insbesondere zur Verwendung bei Spargeldämmen 2 vorgesehen. Grundsätzlich könnte eine derartige Abdeckung 1 unmittelbar auf einen Spargeldamm 2 aufgelegt werden. Die Abdeckung 1 ist zur Verwendung für ein Tunnelsystem 3 vorgesehen, das bevorzugt oberhalb eines Spargeldamms 2 angeordnet ist.
Die Abdeckung 1 weist vorliegend eine erste Folie 4 und eine zweite Folie 5 auf, die jeweils aus einem Kunststoffmaterial bestehen. Die Folien 4, 5 sind langgestreckte Folienbahnen, die sich über die Länge der Abdeckung 1 erstrecken und zum Teil mehrere hundert Meter lang sein können. Die Breite der Abdeckung ist in der Regel größer als 100 cm und liegt üblicherweise zwischen 1,5 und 3 m. Vorliegend beträgt die Breite der Abdeckung 2 m +/- 10 cm. Die erste Folie 4 weist eine Unterseite 6 auf, die im Gebrauchszustand dem Boden 7 zugewandt ist. Die zweite Folie 5 weist ebenfalls eine Unterseite 8 auf, die im Gebrauchszustand der Oberseite 9 der ersten Folie 4 zugewandt ist. Im übrigen sind die erste Folie 4 und die zweite Folie 5 randseitig miteinander verbunden.

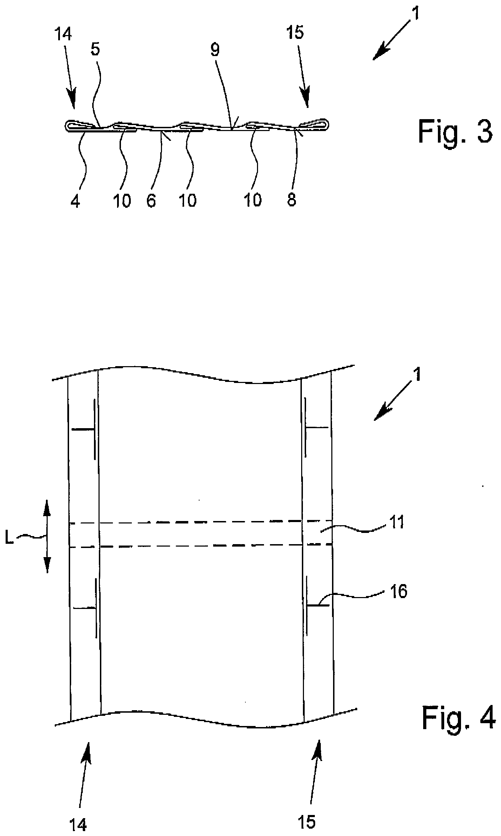

Wesentlich ist nun, dass die Unterseite 6 der ersten Folie 4 im Überdeckungs- bzw. Überlappungsbereich der beiden Folien 4, 5 eine größere Fläche als die Unterseite 8 der zweiten Folie 5 aufweist. Bei der in den Fig. 1 und 2 dargestellten Ausführungsform weist die Unterseite 6 der ersten Folie 4 eine größere Breite im Überdeckungsbereich auf als die Unterseite 8 der zweiten Folie 5. Dem gegenüber ist es bei der in Fig. 4 dargestellten Ausführungsform so, dass die Unterseite 6 der ersten Folie 4 im Überdeckungsbereich eine größere Länge als die Unterseite 8 der zweiten Folie aufweist. In beiden Fällen ist eine 10%ige Vergrößerung (+/- 1%) der Länge bzw. der Breite der ersten Folie 4 gegenüber der zweiten Folie 5 im Überdeckungsbereich vorgesehen. Hinzuweisen ist allerdings darauf, dass sowohl die Längsränder der Abdeckung 1 als auch die Stirnseiten der beiden Folien 4, 5 der Abdeckung 1 im miteinander verbundenen Zustand der Folien 4, 5 jeweils unmittelbar übereinander liegen. Die vergrößerte Fläche der ersten Folienbahn 4 gegenüber der zweiten Folienbahn 5 liegt im Überdeckungsbereich beider Folien 4, 5 vor.

Im nicht verlegten Zustand, wie er in den Fig. 1 bis 6 dargestellt ist, weist die erste Folie 4 Falten auf, die als Materialspeicher dienen. Bei der in den Fig. 1 bis 3 und 5 und 6 dargestellten Ausführungsformen sind jeweils Längsfalten 10 vorgesehen, die sich in Längsrichtung L der Abdeckung 1 erstrecken. Bei der in Fig. 3 dargestellten Ausführungsform sind drei Längsfalten 10 vorgesehen, die den Materialspeicher für die vergrößerte Fläche der ersten Folie 4 gegenüber der zweiten Folie 5 im Überdeckungsbereich bilden. Dem gegenüber ist es bei der in Fig. 4 dargestellten Ausführungsform so, dass dort als Materialspeicher eine Querfalte 11 vorgesehen ist. Letztlich weist die Abdeckung 1 bei der in Fig. 4 dargestellten Ausführungsform eine Vielzahl von Querfalten 11 auf, die in regelmäßigen Abständen über die Länge der Abdeckung 1 verteilt vorgesehen sind. Aus Darstellungsgründen ist lediglich eine dieser Querfalten 11 dargestellt. Bevorzugt verlaufen die einzelnen Falten, unabhängig davon, ob es sich jeweils um Längsfalten 10 und/oder jeweils Querfalten 11 handelt, parallel zueinander.

Bei den in den Fig. 1 bis 4 dargestellten Ausführungsformen ist die Abdeckung 1 aus einem Folienschlauch hergestellt. Dabei kann bei der Herstellung der untere Bereich des Folienschlauchs bzw. die erste Folie gedehnt werden, so dass sich dann eine größere Fläche ergibt. Im Falle der Dehnung der ersten Folie hat diese eine geringere Dicke als die zweite Folie 5. Grundsätzlich ist es aber auch möglich, dass ein Schlauch hergestellt wird, der eine gleichbleibende Schichtdicke hat. Der Materialspeicher wird dann dadurch erzeugt, dass im Bereich der unteren bzw. ersten Folie 4 wenigstens eine Längsfalte vorgesehen und der Schlauch an der gewünschten Stelle entsprechend eingefaltet wird. Bei dieser Ausführungsform sind die erste Folie 4 und die zweite Folie 5 an ihren Längsrändern mittels einer stoffschlüssigen Verbindung miteinander verbunden.

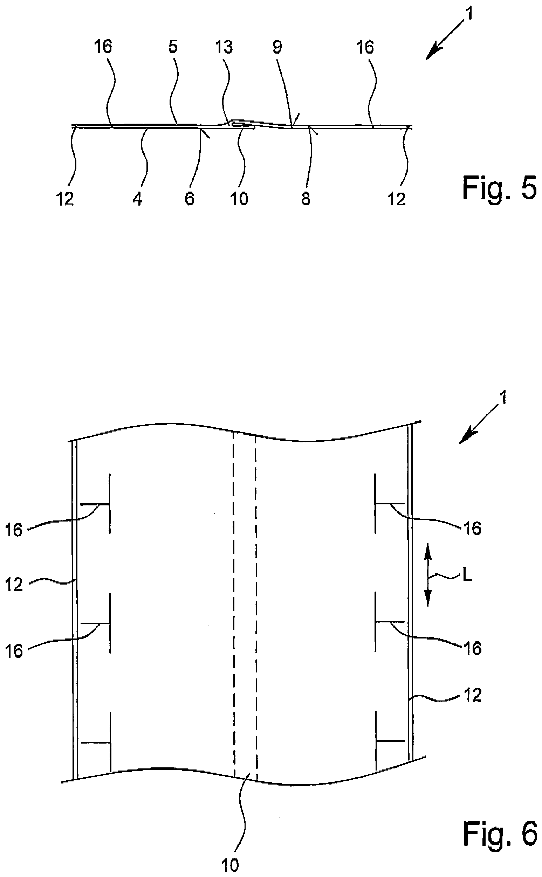

In den Fig. 5 und 6 ist eine Ausführungsform dargestellt, bei der die erste Folie 4 und die zweite Folie 5 jeweils als separate Folien ausgebildet sind, die randseitig über Kleb- und/oder Schweißverbindungen miteinander verbunden sind. Bei der in Fig. 5 dargestellten Ausführungsform sind Längsverschweißungen 12 vorgesehen, die die beiden Folien 4, 5 randseitig an den Längsrändern miteinander verbinden. An ihren Stirnseiten, die quer zur Längsrichtung L verlaufen, sind die Folien 4, 5 unverbunden, so dass der zwischen den zwischen den Folien 4, 5 befindliche Hohlraum 13 von beiden Stirnseiten der Abdeckung 1 her zugänglich ist.

Nicht dargestellt ist, dass die erste und/oder die zweite Folie 4, 5 eine Beschichtung zur Verminderung der Oberflächenspannung zwischen beiden Folien 4, 5 aufweisen können. Auch kann im Hohlraum 13 zwischen der ersten Folie 4 und der zweiten Folie 5 ein sich in Längsrichtung L der Abdeckung 1 erstreckendes Mittel zum Trennen der beiden Folien 4, 5 vorgesehen sein. Mit "Trennen" der beiden Folien 4, 5 ist gemeint, dass sich die beiden Folien 4, 5 im verlegten Zustand innerhalb des Tunnelsystems 3 voneinander lösen und den offenen Hohlraum 13 ausbilden. Bei dem zwischen die beiden Folien 4, 5 vorgesehenen Mittel kann es sich letztlich um jegliches Material handeln, was die Oberflächenspannung zwischen den einander zugewandten Seiten der Folien 4, 5 herabsetzt und/oder mittels seiner Eigengewichtskraft auf die erste Folie 4 wirkt und damit das Ablösen der ersten Folie 4 von der zweiten Folie 5 unterstützt.

Randseitig sind an der Abdeckung 1 jeweils Taschen 14, 15 vorgesehen. Dabei kann an jedem der Längsränder nur eine einzelne Tasche 14, 15 oder eine Vielzahl von Taschen 14, 15 vorgesehen sein. Die Mehrzahl der Taschen 14, 15 werden bevorzugt durch T-förmige Verschweißungen, die voneinander beabstandet sind, gebildet.

Bei der in den Fig. 1 bis 4 dargestellten Ausführungsform sind die Taschen 14, 15 dadurch gebildet, dass die Ränder der Abdeckung 1 umgefaltet sind. Auf den umgefalteten Bereich werden dann die T-förmigen Verschweißungen 16 aufgebracht, wodurch die Taschen 14, 15 gebildet werden. Jede Verschweißung 16 hat einen querlaufenden und einen längslaufenden Bereich.

Bei der in den Fig. 5 und 6 dargestellten Ausführungsform sind randseitig ebenfalls T-förmige Verschweißungen 16 vorgesehen, die die beiden Folien 4, 5 miteinander verbinden. Die zwischen den längslaufenden Verschweißungsbereichen der Verschweißungen 16 befindlichen unverschweißten Bereiche werden geschlitzt, was in Fig. 6 nicht dargestellt ist. Die geschlitzten Bereiche dienen dann als Einfüllöffnungen der Taschen 14, 15 für Beschwerungsgut, das in die Taschen 14, 15 eingebracht werden kann.

Es versteht sich, dass die Art der Herstellung der Taschen 14, 15 nicht auf die Ausführungsform gemäß den Fig. 5 und 6 beschränkt ist, sondern auch bei einem Folienschlauch entsprechend den Fig. 1 bis 4 realisiert werden kann.

Im übrigen ist es bei der in den Fig. 1 bis 4 dargestellten Ausführungsform so, dass die erste Folie 4 und die zweite Folie 5 aus einem transparenten Kunststoffmaterial bestehen. Dem gegenüber ist es bei der in den Fig. 5 und 6 dargestellten Ausführungsform so, dass die erste Folie 4 auf ihrer der zweiten Folie 5 zugewandten Oberseite 9 schwarz ist, während die zweite Folie 5 als äußere Folienbahn aus einem transparenten Kunststoffmaterial besteht.

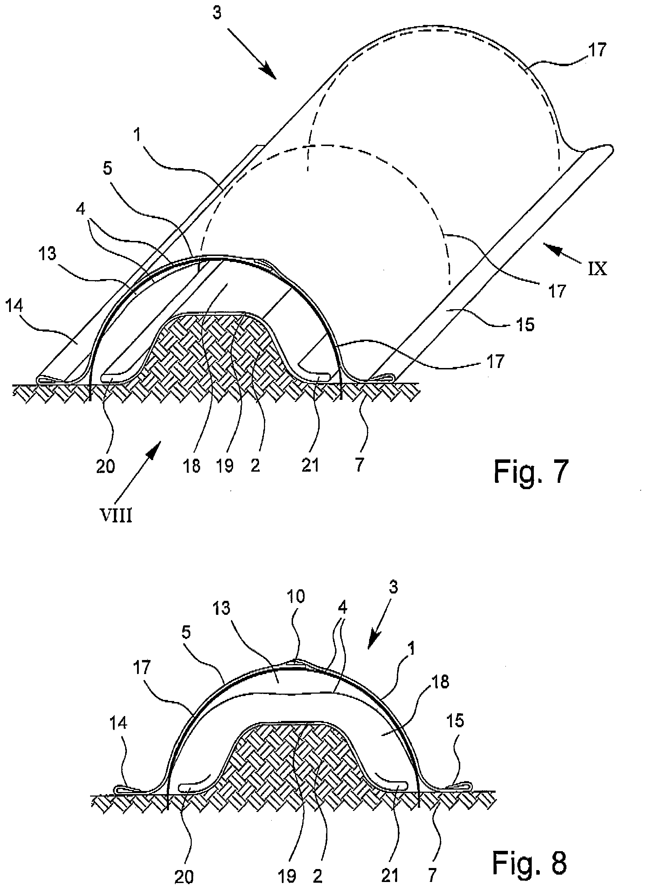

In den Fig. 7 bis 9 ist das Tunnelsystem 3 näher dargestellt. Das Tunnelsystem 3 ist vorliegend oberhalb eines Spargeldamms 2 angeordnet, wobei das Tunnelsystem 3 nicht auf die Verwendung bei Spargeldämmen 2 beschränkt ist. Das Tunnelsystem 3 kann auch zum Schutz anderer Pflanzen dienen.

Das dargestellte Tunnelsystem 3 weist eine Mehrzahl von in den Boden 7 eingesteckten Stützelementen 17 auf, die im dargestellten Ausführungsbeispiel bogenförmig ausgebildet sind. Allerdings können ohne weiteres auch Stützelemente 17 zur Anwendung kommen, wie sie in der DE 10 2010 047 591 B3 beschrieben und dargestellt sind. Auf die Stützelemente 17 ist wenigstens eine Abdeckung 1 der zuvor beschriebenen Art im Gebrauchszustand aufgelegt.

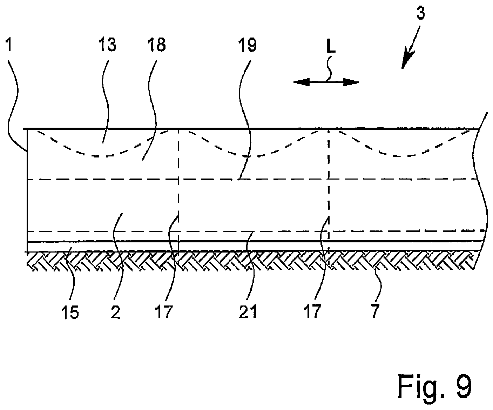

Insbesondere die Fig. 8 und 9 verdeutlichen dabei, dass im aufgelegten Zustand der Abdeckung 1 auf die Stützelemente 17 die erste bzw. untere Folienbahn 4 in Richtung auf den Spargeldamm 2 durchhängt. Auch die zweite Folie 5 kann schon aufgrund des Eigengewichts zwischen zwei Stützelementen 17 durchhängen, wenngleich dies im einzelnen nicht dargestellt ist. Jedoch findet wegen der vergrößerten Fläche der ersten Folie 4 gegenüber der zweiten Folie 5 ein stärkeres Durchhängen der ersten Folie 4 statt. Aufgrund des stärkeren Durchhängens der ersten Folie 4 relativ zur zweiten Folie 5 ergeben sich zwischen benachbarten Stützelementen 17 jeweils einzelne Hohlräume 13 zwischen der ersten Folie 4 und der zweiten Folie 5. Im übrigen verbleibt ein Zwischenraum 18 zwischen der Abdeckung 1 bzw. der Unterseite 8 der ersten Folie 4 und dem Spargeldamm 2, wobei auf den Spargeldamm 2 eine Spargelfolie 19 aufgelegt ist. Zur Beschwerung der Spargelfolie 19 weist diese randseitig ebenfalls Taschen 20, 21 auf. Diese Taschen 20, 21 sind bevorzugt in gleicher Weise ausgebildet wie die Taschen 15, 16 an der Abdeckung 1. Bei einer einschichtigen Ausführung der Spargelfolie 19 werden die Taschen 20, 21 allerdings durch Umschlagen der Längsränder der Spargelfolie 19 und entsprechende T-Verschweißungen gebildet.

Der Aufbau des dargestellten Tunnelsystems 3 erfolgt derart, dass zunächst die Spargelfolie 19 auf den Spargeldamm 2 aufgelegt wird. Anschließend werden die Taschen 20, 21 mit Beschwerungsgut gefüllt. Sodann werden in regelmäßigen oder unregelmäßigen Abständen die Stützelemente 17 in den Boden 7 eingesteckt. Auf die eingesteckten Stützelemente 17 wird dann die Abdeckung 1 aufgebracht, wobei vor und/oder während und/oder nach dem Auflegen der Abdeckung 1 auf die Stützelemente 17 Luft zwischen die beiden Folien 4, 5 von zumindest einer der Stirnseiten der Abdeckung 1 her eingeblasen wird. Auf diese Weise löst sich die Folie 4 von der Folie 5 sofern das Lösen nicht ohnehin von selbst erfolgt. Anschließend werden die Taschen 14, 15 der Abdeckung 1 ebenfalls mit Beschwerungsgut befüllt.

Aufgrund der beiden Folien 4, 5 und des zwischen den Folien 4, 5 befindlichen Hohlraums 13 bzw. der Einzelhohlräume 13 zwischen den Stützelementen 17 bietet die Abdeckung 1 eine ausgezeichnete Isolierwirkung und damit einen thermischen Schutz für den Spargeldamm 2.

**Bezugszeichenliste:**

| | | | |
|---|---|---|---|
| 1 | Abdeckung | 13 | Hohlraum |
| 2 | Spargeldamm | 14 | Tasche |
| 3 | Tunnelsystem | 15 | Tasche |
| 4 | erste Folie | 16 | Verschweißung |
| 5 | zweite Folie | 17 | Stützelement |
| 6 | Unterseite | 18 | Zwischenraum |
| 7 | Boden | 19 | Spargelfolie |
| 8 | Unterseite | 20 | Tasche |
| 9 | Oberseite | 21 | Tasche |
| 10 | Längsfalte | | |
| 11 | Querfalte | L | Längsrichtung |
| 12 | Längsverschweißung | | |

## Patentansprüche

1. Verwendung einer Abdeckung (1) für ein Tunnelsystem (3), vorzugsweise für Spargeldämme (2), mit einer ersten Folie (4), deren Unterseite (6) im Gebrauchszustand dem Boden (7) zugewandt ist, und einer zweiten Folie (5), deren Unterseite (8) im Gebrauchszustand der Oberseite (9) der ersten Folie (4) zugewandt ist, wobei die erste Folie (4) und die zweite Folie (5) miteinander verbunden sind, wobei die Unterseite (6) der ersten Folie (4) im Überlappungsbereich der beiden Folien (4, 5) eine größere Fläche als die Unterseite (8) der zweiten Folie (5) aufweist, wobei die Länge und/oder Breite der ersten Folie (4) zwischen 5 % und 40 % größer ist als die Breite und/oder Länge der zweiten Folie (5) und wobei die erste Folie (4) wenigstens eine quer zur Längsrichtung (L) der Abdeckung (1) laufende Querfalte (11) und/oder wenigstens eine in Längsrichtung (L) der Abdeckung (1) laufende Längsfalte (10) aufweist.

2. Verwendung nach Anspruch 1, **dadurch gekennzeichnet, dass** die Unterseite (6) der ersten Folie (4) im Überdeckungsbereich der beiden Folien (4, 5) eine größere Breite und/oder eine größere Länge als die Unterseite (8) der zweiten Folie (5) aufweist.

3. Verwendung nach Anspruch 1 oder 2, **dadurch gekennzeichnet, dass** die Breite und/oder Länge der ersten Folie (4) im Überdeckungsbereich der beiden Folien (4, 5) mehr als 2% größer ist als die Breite und/oder Länge der zweiten Folie (5).

4. Verwendung nach einem der vorhergehenden Ansprüche, **dadurch gekennzeichnet, dass** die Länge und/oder Breite der ersten Folie (4) zwischen 6% und 30%, weiter bevorzugt zwischen 7% und 20% und insbesondere zwischen 8% und 15% größer ist als die Breite und/oder Länge der zweiten Folie (5).

5. Verwendung nach einem der vorhergehenden Ansprüche, **dadurch gekennzeichnet, dass** eine Mehrzahl von parallel zueinander verlaufenden Längsfalten (10) und/oder Querfalten (11) vorgesehen sind.

6. Verwendung nach einem der vorhergehenden Ansprüche, **dadurch gekennzeichnet, dass** die erste Folie (4) und die zweite Folie (5) aus einem Folienschlauch hergestellt sind oder dass die erste Folie (4) und die zweite Folie (5) als separate Folien ausgebildet sind, die randseitig über Kleb- und/oder Schweißverbindungen miteinander verbunden sind.

7. Verwendung nach einem der vorhergehenden Ansprüche, **dadurch gekennzeichnet, dass** die an ihren Längsrändern miteinander verbundenen Folien (4, 5) stirnseitig unverbunden sind.

8. Verwendung nach einem der vorhergehenden Ansprüche, **dadurch gekennzeichnet, dass** die erste und/oder die zweite Folie (4, 5) eine Beschichtung zur Verminderung der Oberflächenspannung aufweisen.

9. Verwendung nach einem der vorhergehenden Ansprüche, **dadurch gekennzeichnet, dass** zwischen der ersten Folie (4) und der zweiten Folie (5) ein sich in Längsrichtung (L) der Abdeckung (1) erstreckendes Mittel zum Trennen der beiden Folien (4, 5) vorgesehen ist.

10. Verwendung nach einem der vorhergehenden Ansprüche, **dadurch gekennzeichnet, dass** die erste Folie (4) und die zweite Folie (5) aus einem transparenten Kunststoffmaterial bestehen oder dass die erste Folie (4) auf ihrer der zweiten Folie (5) zugewandten Oberseite (9) schwarz ist, während die zweite Folie (5) aus einem transparenten Kunststoffmaterial besteht.

11. Verwendung nach einem der vorhergehenden Ansprüche, **dadurch gekennzeichnet, dass** die Abdeckung (1) randseitig Taschen (14, 15) zur Aufnahme von Beschwerungsgut aufweist.

## Claims

1. Use of a covering (1) for a tunnel system (3), preferably for asparagus beds (2), having a first film (4), the underside (6) of which faces the ground (7) in the operative condition, and a second film (5), the underside (8) of which faces the top side (9) of the first film (4) in the operating state, wherein the first film (4) and the second film (5) are connected to one another, wherein the underside (6) of the first film (4) has, in the overlap region of the two films (4, 5), a greater area than the underside (8) of the second film (5), wherein the length and/or width of the first film (4) is between 5% and 40% greater than the width and/or length of the second film (5) and wherein the first film (4) has at least one transverse fold (11) running transversely to the longitudinal direction (L) of the covering (1) and/or at least one longitudinal fold (10) running in the longitudinal direction (L) of the covering (1).

2. Use according to claim 1, **characterised in that** the underside (6) of the first film (4) has, in the overlap region of the two films (4, 5), a greater width and/or a greater length than the underside (8) of the second film (5).

3. Use according to claim 1 or 2, **characterised in that** the width and/or length of the first film (4) is, in the overlap region of the two films (4, 5), more than 2% greater than the width and/or length of the second film (5).

4. Use according to any one of the preceding claims, **characterised in that** the length and/or width of the first film (4) is between 6% and 30%, more preferably between 7% and 20% and particularly between 8% and 15% greater than the width and/or length of the second film (5).

5. Use according to any one of the preceding claims, **characterised in that** a plurality of longitudinal folds (10) and/or transverse folds (11) running parallel to one another are provided.

6. Use according to any one of the preceding claims, **characterised in that** the first film (4) and the second film (5) are produced from a film tube or that the first film (4) and the second film (5) are formed as separate films, which are connected to one another on the edges by means of adhesive and/or welded connections.

7. Use according to any one of the preceding claims, **characterised in that** the films (4, 5) connected to one another on their longitudinal edges are not connected on their ends.

8. Use according to any one of the preceding claims, **characterised in that** the first and/or the second film (4, 5) has a coating to reduce surface tension.

9. Use according to any one of the preceding claims, **characterised in that** between the first film (4) and the second film (5) a means extending in the longitudinal direction (L) of the covering (1) is provided for separating the two films (4, 5).

10. Use according to any one of the preceding claims, **characterised in that** the first film (4) and the second film (5) consist of a transparent plastic material or that the first film (4) is black on its top side (9) facing the second film (5), while the second film (5) consists of a transparent plastic material.

11. Use according to any one of the preceding claims, **characterised in that** the covering (1) has pockets (14, 15) on the edges for receiving ballasting material.

## Revendications

1. Utilisation d'une couverture (1) pour un système de tunnel (3), de préférence pour des buttes d'asperges (2), comprenant une première feuille (4), dont la face inférieure (6) est, à l'état d'utilisation, dirigée vers le sol (7) et une deuxième feuille (5), dont la face inférieure (8) est, à l'état d'utilisation, dirigée vers la face supérieure (9) de la première feuille (4), la première feuille (4) et la deuxième feuille (5) étant reliées l'une à l'autre, la face inférieure (6) de la première feuille (4) présentant, dans la zone de chevauchement des deux feuilles (4, 5), une surface plus grande que la face inférieure (8) de la deuxième feuille (5), selon laquelle la longueur et/ou la largeur de la première feuille (4) est de 5 % à 40 % plus grandes que la largeur et/ou la longueur de la deuxième feuille (5) et selon laquelle la première feuille (4) présente au moins un pli transversal (11), courant perpendiculairement à la direction longitudinale (L) de la couverture (1) et/ou au moins un pli longitudinal (10) courant dans la direction longitudinale (L) de la couverture (1).

2. Utilisation selon la revendication 1, **caractérisée en ce que** la face inférieure (6) de la première feuille (4) présente dans la zone de recouvrement des deux feuilles (4, 5), une largeur plus grande et/ou une longueur plus grande que la face inférieure (8) de la deuxième feuille (5).

3. Utilisation selon la revendication 1 ou 2, **caractérisée en ce que** la largeur et/ou la longueur de la première feuille (4) est, dans la zone de recouvrement des deux feuilles (4, 5), de plus de 2 % plus grandes que la largeur et/ou la longueur de la deuxième feuille (5).

4. Utilisation selon l'une quelconque des revendications précédentes, **caractérisée en ce que** la longueur et/ou la largeur de la première feuille (4) est de 6 % à 30 %, plus préférentiellement de 7 % à 20 % et en particulier de 8 % à 15 % plus grandes que la largeur et/ou la longueur de la deuxième feuille (5).

5. Utilisation selon l'une quelconque des revendications précédentes, **caractérisée en ce qu'**il est prévus un grand nombre de plis longitudinaux (10) et/ou de plis transversaux (11) courant parallèlement les uns aux autres.

6. Utilisation selon l'une quelconque des revendications précédentes, **caractérisée en ce que** la première feuille (4) et la deuxième feuille (5) sont fabriquées à partir d'un film tubulaire ou **en ce que** la première feuille (4) et la deuxième feuille (5) sont conçues sous forme de feuilles distinctes, qui sur leurs bords sont assemblées l'une à l'autre par des liaisons par collage et/ou soudage.

7. Utilisation selon l'une quelconque des revendications précédentes, **caractérisée en ce que** les feuilles (4, 5) assemblées l'une à l'autre au niveau de leurs bords longitudinaux sont non-assemblées côté avant.

8. Utilisation selon l'une quelconque des revendications précédentes, **caractérisée en ce que** la première et/ou la deuxième feuille (4, 5) comprennent un revêtement destiné à diminuer la tension superficielle.

9. Utilisation selon l'une quelconque des revendications précédentes, **caractérisée en ce qu'**il est prévu entre la première feuille (4) et la deuxième feuille (5) un moyen, s'étendant dans la direction longitudinale (L) de la couverture (1), pour séparer les deux feuilles (4, 5).

10. Utilisation selon l'une quelconque des revendications précédentes, **caractérisée en ce que** la première feuille (4) et la deuxième feuille (5) sont constituées d'un matériau plastique transparent ou **en ce que** la première feuille (4) est noire sur sa face supérieure (9) dirigée vers la deuxième feuille (5), tandis que la deuxième feuille (5) est constituée d'un matériau plastique transparent.

11. Utilisation selon l'une quelconque des revendications précédentes, **caractérisée en ce que** la couverture (1) présente sur ses bords des poches (14, 15) destinées à recevoir des produits de lestage.
